# EUROPEAN PATENT SPECIFICATION

(11) **EP 3 069 977 B1**
(45) Date of publication and mention of the grant of the patent: **20.09.2017**
(21) Application number: 16152665.2
(22) Date of filing: 26.01.2016
(51) Int. Cl.: B62K 5/01, B62D 9/02, B62K 5/027, B62K 5/08, B62K 5/10

(54) **ROCKING VEHICLE**
NEIGEFAHRZEUG
VÉHICULE INCLINABLE

(30) Priority: 18.03.2015 JP 2015054986
(43) Date of publication of application: 21.09.2016
(73) Proprietor: HONDA MOTOR CO., LTD., Tokyo, 107-8556 (JP)
(72) Inventor: Kawasaki, Yohei, Saitama, 351-0193 (JP); Kobayashi, Hiroyoshi, Saitama, 351-0193 (JP); Nose, Tsubasa, Saitama, 351-0193 (JP)
(74) Representative: Kiwit, Benedikt

(56) References cited:
- EP-A1- 1 561 612
- US-A1- 2014 346 753

## Description

The present invention relates to a rocking vehicle.

There has heretofore been known a rocking vehicle which includes: upper and lower rocker arms; and side members which are coupled to ends of the rocker arms by coupling portions, wherein the rocking center of each rocker arm and the coupling portions at the ends of the rocker arm are arranged on the same straight line (see, for example, Patent Literature 1). Patent Literature 2, on which the preamble of independent claim 1 is based, provides a road holding ability mechanism applied to a motorcycle with two wheels in front. The mechanism enables the two front wheels to offer the ability to remain stable when moving to ensure the motorcycle against rollovers. Patent Literature 3 discloses an anti-rolling device for vehicles of the type equipped with a front steer system with articulated quadrilateral structure and with two independent front suspensions.

Patent Literature 1: WO 2014/098228 A1
Patent Literature 2: US 2014/0346753 A1
Patent Literature 3: EP 1 561 612 A1

Meanwhile, in a rocking vehicle, such as the above-described related art, it is desirable to improve the turning performance while ensuring the clearance between wheels and vehicle body components.

Accordingly, the present invention has been made in view of the foregoing, and an object of the present invention is to provide a rocking vehicle which allows an improvement in turning performance while ensuring the clearance between wheels and vehicle body components.

In order to achieve the above-mentioned object, the present invention, according to a feature, provides a rocking vehicle as described in independent claim 1. According to the present invention, the rocking center of the upper arm is disposed above the straight line connecting the left and right pivots of the upper arm, that couple the left and right end portions of the upper arm to the side members, and the rocking center of the lower arm is disposed above the straight line connecting the left and right pivots of the lower arm, that couple the left and right end portions of the lower arm to the side members. Thus, if the vehicle body is rocked at the same tilt angle during turning, the ground contact points of the wheels are located further inward in the turning direction with respect to the vehicle-body center, as compared with a configuration in which the rocking center of each arm and the left and right pivots are arranged on the same straight line. It is therefore possible to ensure the clearance between vehicle body components, such as the body frame, and the wheels during turning, and to improve the turning performance. According to the present invention, with the rocking vehicle in the upright position the roll damper of the rocker mechanism has the upper and lower supporting points disposed along the vehicle-body center (C), the upper supporting point being disposed below the rocking center of the upper arm and above the left and right pivots of the upper arm, the lower supporting point being disposed below the rocking center of the lower arm and above the left and right pivots of the lower arm. Thus, since the roll damper can be disposed along the vehicle-body center utilizing the vertical space formed by the shapes of the upper arm and the lower arm, it is possible to compactly provide the roll damper while ensuring the length of the roll damper.

Furthermore, a feature of the present invention is that: the left and right pivots (47, 47) of the upper arm (29) are arranged below a horizontal line (L4) passing through a lower end (58a) of the vehicle-body center of the upper arm (29); and the left and right pivots (48, 48) of the lower arm (30) are arranged below a horizontal line (L2) passing through a lower end (50a) of the vehicle-body center of the lower arm (30).

According to the present invention, the left and right pivots of the upper arm are arranged below the horizontal line passing through the lower end of the vehicle-body center of the upper arm, and the left and right pivots of the lower arm are arranged below the horizontal line passing through the lower end of the vehicle-body center of the lower arm. Thus, since the ground contact points of the wheels can be made largely closer to the inside, it is possible to ensure the clearance between the vehicle body components and the wheels, and to improve the turning performance.

Further, a feature of the present invention is that the rocking vehicle includes tie rods (45L, 45R) that are configured to transmit a steering force to the wheels (12L, 12R), wherein the lower arm (30) has an opening angle (θ1) between left and right arms (51L, 51R), the opening angle (θ1) being greater than an opening angle (θ3) between the left and right tie rods (45L, 45R). According to the present invention, the opening angle of the lower arm between the left and right arms is greater than the opening angle between the left and right tie rods. Thus, when the vehicle body is rocked and tilted, the wheels turn automatically inward in the turning direction according to the relationship between the opening angle of the arm and the opening angle of the tie rods. Consequently, the turning performance can be improved.

Additionally, a feature of the present invention is that a lower arm supporting portion (23) supporting the lower arm (30) is provided to a head pipe (13) of the body frame (11), and a damper support portion (74) supporting the roll damper (31) is provided below the lower arm supporting portion (23).

According to the present invention, the lower arm supporting portion is provided to the head pipe of the body frame, and the damper support portion is provided below the lower arm supporting portion. Thus, it is possible to provide the damper support portion utilizing the space below the lower arm supporting portion and compactly arrange the damper support portion and the roll damper, so that the space for steering the wheels can be ensured.

In the rocking vehicle according to the present invention, it is possible to ensure the clearance between vehicle body components, such as the body frame, and the wheels during turning, and to improve the turning performance.

Furthermore, it is possible to compactly provide the roll damper while ensuring the length of the roll damper.

Moreover, when the rocking vehicle is tilted, the wheels turn automatically inward in the turning direction, thereby allowing an improvement in turning performance.

Additionally, since the damper support portion and the roll damper can be compactly arranged utilizing the space below the lower arm supporting portion, the space for steering the wheels can be ensured.

Fig. 1 is a view of a rocking vehicle according to an embodiment of the present invention, viewed from the front.
Fig. 2 is a left side view of the front portion of the rocking vehicle.
Fig. 3 is a view of the periphery of a rocker arm as viewed from the front side.
Fig. 4 is a perspective view of the periphery of the rocker arm as viewed from the left front side.
Fig. 5 is a view of the periphery of the rocker arm as viewed from the rear side.
Fig. 6 is a front view illustrating geometric shapes of a rocker mechanism and a tie rod.
Fig. 7 is a front view showing the states of the rocker mechanism and front wheels when the rocking vehicle rock rocks to the left.
Fig. 8 shows the states of the rocking vehicle before and after turning, wherein (a) is an upright position, and (b) is a tilted position.
Fig. 9 shows the states of a rocking vehicle before and after turning according to a comparative example, wherein (a) is an upright position, and (b) is a tilted position.
Fig. 10 is a chart showing the relationship between the tilt angle of the vehicle and the turning angle of the front wheels.
Fig. 11 shows the displacement of a roll damper caused by the tilting motion of the rocking vehicle.
Fig. 12 shows the displacement of a roll damper in a comparative example.
Fig. 13 is a sectional view taken along line XII-XII of Fig. 2.

Hereinafter, an embodiment of the present invention will be described with reference to the accompanying drawings. It is to be noted that, throughout the description, references to directions, such as front, rear, left, right, upward, and downward, are made with reference to a vehicle, unless otherwise stated. It is also to be noted that, in the drawings, reference sign FR denotes the front of the vehicle, reference sign UP denotes the upside of the vehicle, and reference sign LH denotes the left of the vehicle.

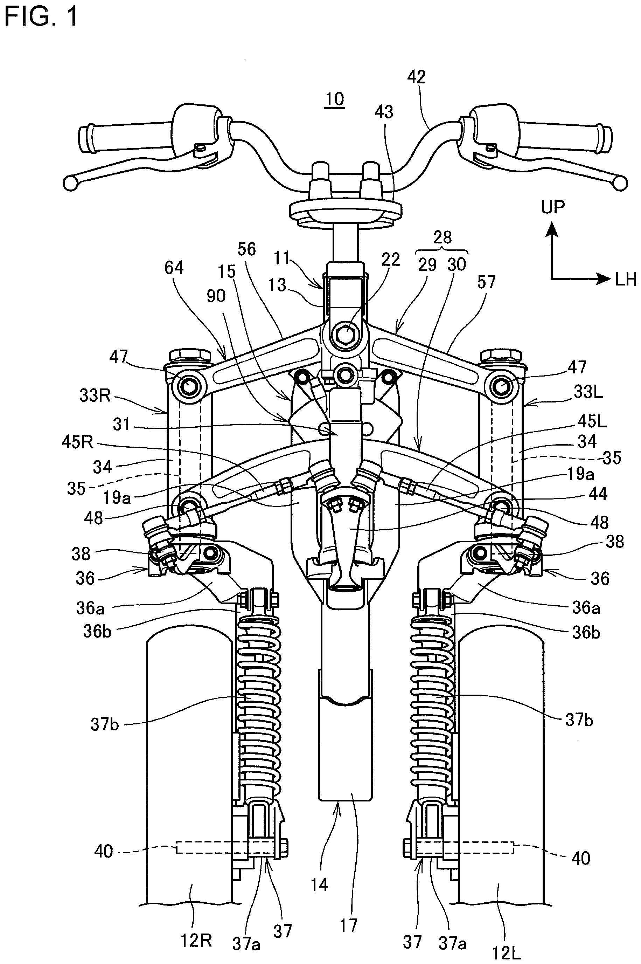

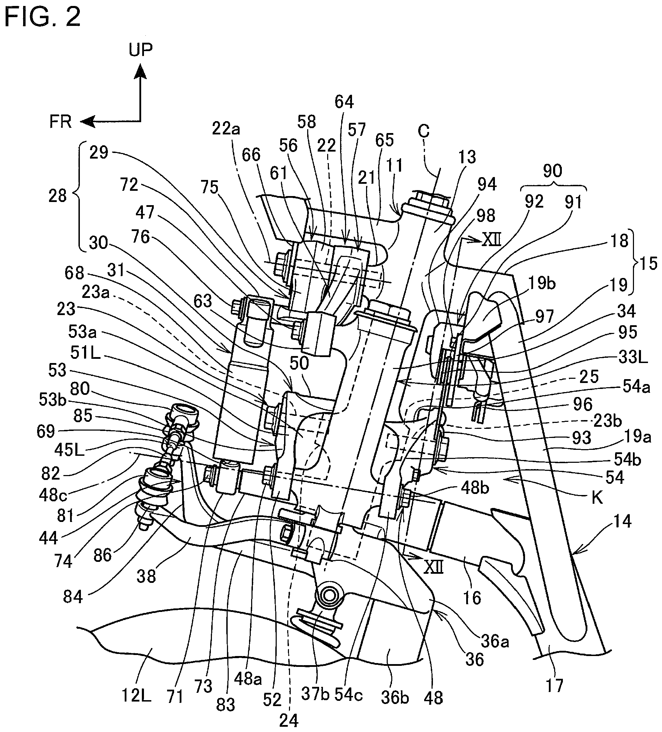

Fig. 1 is a view of a rocking vehicle according to an embodiment of the present invention, viewed from the front. Fig. 2 is a left side view of the front portion of the rocking vehicle. It should be noted that in Fig. 1, the structure of the front portion of the vehicle is shown and the structure of the rear portion is not shown.

A rocking vehicle 10 is a three-wheeled vehicle which includes: a body frame 11; a pair of front wheels 12L and 12R (wheels) provided on the left and right sides below the front portion of the body frame 11; a single rear wheel (not shown) provided at the center in the vehicle width direction of the rear portion of the rocking vehicle 10; and a power unit (not shown) that drives the rear wheel serving as a driving wheel.

The rocking vehicle 10 is a saddle-ride type vehicle which includes, toward the rear thereof, a seat (not shown) on which an occupant sits astride.

The body frame 11 includes: a head pipe 13 at the front end; a main frame 14 that is inclined to extend downwardly from the head pipe 13 to the rear; and a rear frame (not shown) that extends rearwardly from the main frame 14.

The power unit, which is, for example, an engine, is disposed rearward of the main frame 14. In the rear of the body frame 11, there is provided a swing arm (not shown) extending rearward with the front end pivotally supported and being freely rockable in the vertical direction, and the rear wheel is journaled to the rear end of the swing arm. Here, the swing arm may be of a so-called unit swing type in which the swing arm and the power unit are integrally provided.

The cylindrical head pipe 13, in side view, is disposed so as to be inclined in such a manner that the axis C (left-right vehicle width center) is inclined rearward. The head pipe 13 is located at the center of the rocking vehicle 10 in the vehicle width direction.

The main frame 14 includes: an upper main frame 15 that extends downwardly toward the rear from the rear surface of an upper portion of the head pipe 13; a lower main frame 16 that extends downwardly toward the rear from the rear surface of a lower portion of the head pipe 13; and a rear main frame 17 that extends downwardly from the rear end of the lower main frame 16. The lower main frame 16 is disposed in a position substantially perpendicular to the head pipe 13. The rear main frame 17 descends rearward and downward at an angle greater than the lower main frame 16.

The upper main frame 15 includes: a frame upper end portion 18 that extends rearwardly almost parallel to the lower main frame 16 from the head pipe 13; and a pair of left and right bifurcated frames 19 that are bifurcated into left and right from the rear end of the frame upper end portion 18 and extend downward.

The bifurcated frames 19 are disposed so as to be inclined downwardly toward the rear at almost the same angle as the lower main frame 16, and face the rear surface of the head pipe 13. The upper ends of the bifurcated frames 19 are connected to side portions of the rear end of the frame upper end portion 18, and the lower ends are connected to side portions of the upper end of the rear main frame 17. The bifurcated frames 19 include intermediate portions 19a that are laterally stretched so as to be located further outward in the vehicle width direction than the head pipe 13, the intermediate portions 19a extending almost parallel to each other.

That is, a head pipe rear space K surrounded by the head pipe 13, the upper main frame 15, and the lower main frame 16 is formed between the head pipe 13 and the main frame 14 in side view.

A columnar supporting portion 21 protruding forward is provided on the front surface of an upper portion of the head pipe 13, and a bolt-like upper rocker shaft 22 (rocking center of an upper arm) is fastened to the supporting portion 21. The upper rocker shaft 22 is disposed in a position inclined downwardly toward the rear in side view, the leading end thereof being threaded to the supporting portion 21. More specifically, in side view, the axis 22a of the upper rocker shaft 22 is inclined downwardly toward the rear at a slightly smaller angle than a plane (not shown) perpendicular to the axis C of the head pipe 13. It should be noted that Fig. 1 is a front view of the front portion of the rocking vehicle 10 as viewed in the direction of the axis 22a of the upper rocker shaft 22.

A lower rocker shaft 23 (rocking center of a lower arm, or lower arm supporting portion) extending forwardly and rearwardly from the head pipe 13 is provided at a lower portion of the head pipe 13. The lower rocker shaft 23 and the upper rocker shaft 22 are arranged at the center in the vehicle width direction. The lower rocker shaft 23 is disposed parallel to the upper rocker shaft 22 and extends downwardly toward the rear. More specifically, the lower rocker shaft 23 includes: a first lower rocker shaft 23a that extends obliquely forwardly and upwardly from the front surface of the head pipe 13; and a second lower rocker shaft 23b that extends obliquely rearwardly and downwardly from the rear surface of the head pipe 13. The first lower rocker shaft 23a and the second lower rocker shaft 23b are coaxially arranged.

A columnar front-side supporting portion 24 protruding forward is provided on the front surface of a lower portion of the head pipe 13. The first lower rocker shaft 23a is formed in a bolt shape, the leading end thereof being fastened to the front-side supporting portion 24 from the front.

A columnar rear-side supporting portion 25 protruding rearward is provided on the rear surface of a lower portion of the head pipe 13. The second lower rocker shaft 23b is formed in a bolt shape, the leading end thereof being fastened to the rear-side supporting portion 25 from the rear.

A rocker arm 28 capable of rocking left and right is provided forward of the head pipe 13.

The rocker arm 28 includes: an upper arm 29 capable of rocking left and right about the upper rocker shaft 22; and a lower arm 30 capable of rocking left and right about the lower rocker shaft 23.

A roll damper 31 (damper) is provided forward of the rocker arm 28 for suppressing displacement (displacement in the roll direction) of the rocker arm 28 around the upper rocker shaft 22 and the lower rocker shaft 23.

The upper arm 29 and the lower arm 30 each extend horizontally (in the vehicle width direction) from the center in the vehicle width direction. A left front-wheel supporting member 33L and a right front-wheel supporting member 33R for turnably supporting the left and right front wheels 12L and 12R are supported on the left and right ends of the upper arm 29 and the lower arm 30.

The left front-wheel supporting member 33L and the right front-wheel supporting member 33R each include: a pipe-shaped side member 34 that is coupled to the upper arm 29 and the lower arm 30; a steering shaft 35 (Fig. 1) that is journaled in the side member 34; a bottom bridge 36 that is fixed to the lower end of the steering shaft 35; and a link suspension mechanism 37 that is coupled to the bottom bridge 36.

Each of the bottom bridges 36 is freely turnable left and right about the steering shaft 35. The bottom bridge 36 includes: a rearwardly extending portion 36a that extends inward and rearward in the vehicle width direction; and a support arm 36b that extends downwardly from a rear portion of the rearwardly extending portion 36a. Tie-rod coupling arms 38 extending forward above the front wheels 12L and 12R are mounted to front portions of the bottom bridges 36.

The link suspension mechanism 37 includes: a link 37a that extends forwardly from the lower end of the support arm 36b; and a cylindrical shock absorber 37b that extends between the front end of the link 37a and rearwardly extending portion 36a. The link 37a is supported so as to be vertically rockable about the rear end, and the front wheels 12L and 12R are each journaled by an axle 40 provided at the front end of the link 37a.

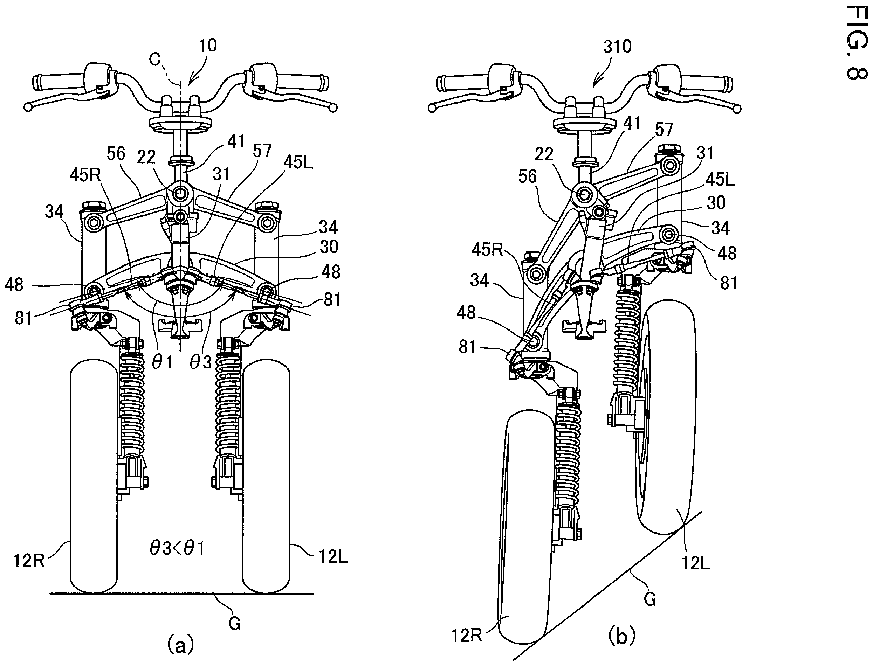

A handle shaft 41 (Fig. 8) is journaled within the head pipe 13. A handlebar 42 adapted to be manipulated by an occupant is mounted to the upper end of the handle shaft 41 with a handle post 43 interposed therebetween.

The handle shaft 41 passes through the head pipe 13 and extends downward, and a tie-rod support arm 44 rotating integrally with the handle shaft 41 is fixed to the lower end of the handle shaft 41. The tie-rod support arm 44 is coupled to the tie-rod coupling arms 38 by a pair of left and right tie rods 45L and 45R extending in the vehicle width direction.

When the handlebar 42 is turned, the bottom bridges 36 are turned about the steering shafts 35 through the tie-rod support arm 44, the tie rods 45L and 45R, and the tie-rod coupling arms 38, and thus the front wheels 12L and 12R are operated to the direction in which the handlebar 42 has been turned.

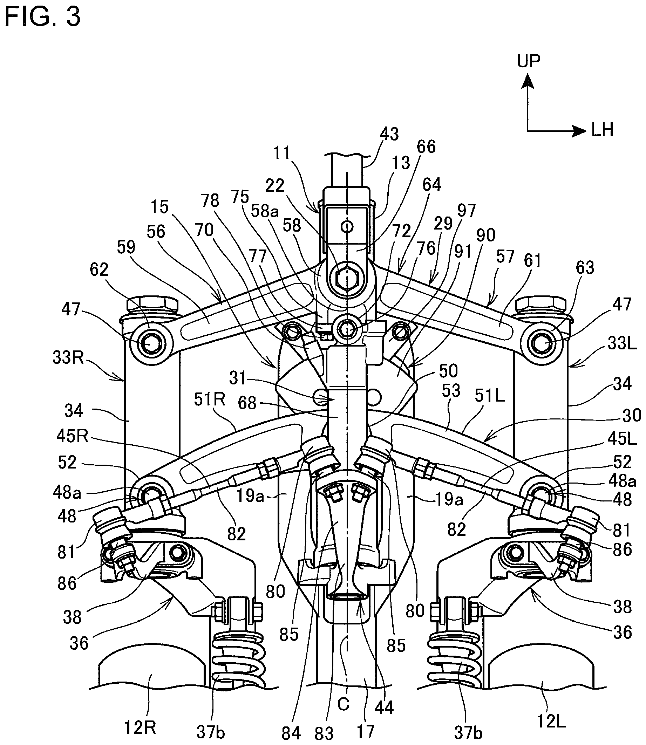

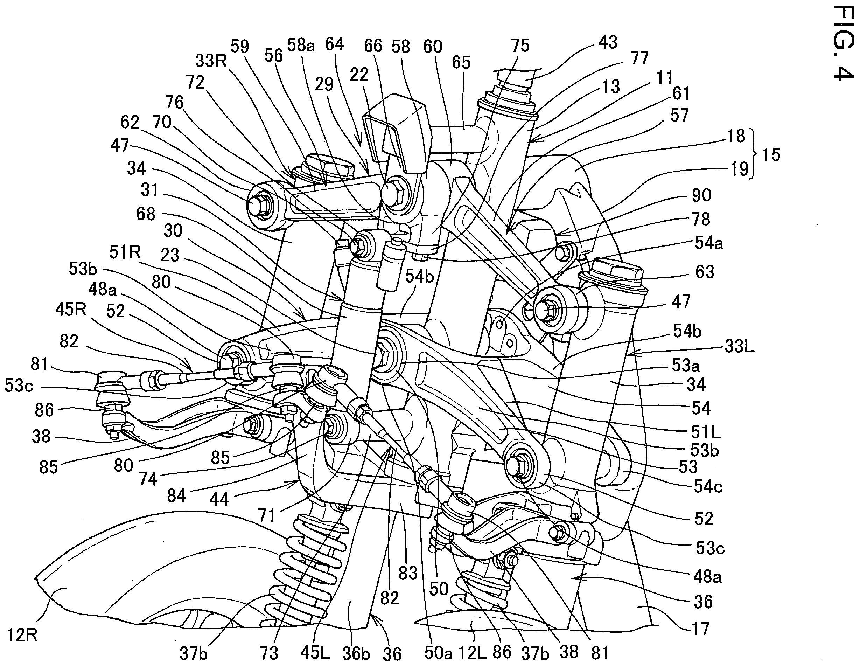

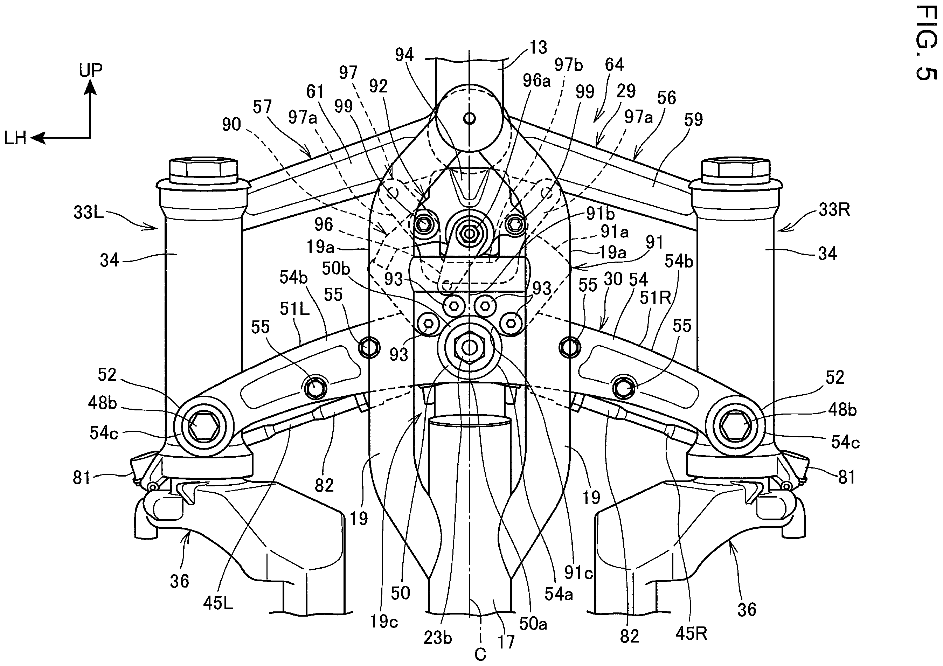

Fig. 3 is a view of the periphery of the rocker arm 28 as viewed from the front side. Fig. 4 is a perspective view of the periphery of the rocker arm 28 as viewed from the left front side. Fig. 5 is a view of the periphery of the rocker arm 28 as viewed from the rear side. More specifically, Fig. 3 is a front view taken in the direction of the axis 22a of the upper rocker shaft 22.

Referring to Figs. 1 to 5, the side members 34 are located on the left and right lateral sides of the head pipe 13 and arranged parallel to the head pipe 13.

The side members 34 each include: an upper coupling shaft 47 (pivot) that extends forwardly from the front surface of an upper portion thereof; and a lower coupling shaft 48 (pivot) that extends forwardly and rearwardly from the front surface and rear surface of a lower portion thereof. The upper coupling shafts 47 and the lower coupling shafts 48 are arranged parallel to the upper rocker shaft 22 and the lower rocker shaft 23.

The upper coupling shafts 47 are each formed in a bolt shape, the leading end thereof being fastened to the upper portion of the side member 34 from the front.

Each of the lower coupling shafts 48 includes a first lower coupling shaft 48a provided on the front surface of the side member 34, and a second lower coupling shaft 48b provided on the rear surface of the side member 34. The first lower coupling shaft 48a is formed in a bolt shape, the leading end thereof being fastened to the side member 34 from the front. The second lower coupling shaft 48b is formed in a bolt shape, the leading end thereof being fastened to the side member 34 from the rear. The first lower coupling shaft 48a and the second lower coupling shaft 48b are coaxially provided.

The lower arm 30 integrally includes: a lower rocking center portion 50 that is journaled to the lower rocker shaft 23; and lower arm portions 51L and 51R (left and right arms) that extend to the left and right, respectively, from the lower rocking center portion 50 and are coupled to the side members 34. The lower arm portions 51L and 51R are formed symmetrical with respect to the lower rocking center portion 50.

The lower rocking center portion 50 is cylindrically formed and journaled to the lower rocker shaft 23 through a bearing fitted into the inner periphery. A lower end 50a (Fig. 4) of the outer periphery of the lower rocking center portion 50 is located at the center in the vehicle width direction.

The lower arm portions 51L and 51R include cylindrical end portions 52 at the outer ends thereof in the vehicle width direction. The lower arm portions 51L and 51R are journaled to the lower coupling shafts 48 through bearings fitted into the inner periphery of the end portions 52.

The lower arm portions 51L and 51R are formed inclined so as to be located downwardly toward the outer side in the vehicle width direction from the lower rocking center portion 50, and the end portions 52 are located below the lower rocking center portion 50. That is, the lower arm 30 is formed in an inverted V-shape in front view.

Furthermore, the lower arm 30 includes: a front-side lower arm 53 disposed forward of the head pipe 13; and a rear-side lower arm 54 disposed rearward of the head pipe 13. The lower arm 30 is provided in such a manner that the head pipe 13 is sandwiched from the front and rear between the front-side lower arm 53 and the rear-side lower arm 54. The front-side lower arm 53 and the rear-side lower arm 54 are joined together by a plurality of bolts 55 (Fig. 5) inserted into the rear-side lower arm 54 from the rear.

More specifically, the front-side lower arm 53 includes: a front-side rocking center portion 53a that is journaled to the first lower coupling shaft 48a; left and right front-side arm portions 53b that extend toward the front surfaces of the side members 34 from the front-side rocking center portion 53a; and front-side end portions 53c that are journaled to the first lower coupling shafts 48a.

The rear-side lower arm 54 includes: a rear-side rocking center portion 54a that is journaled to the second lower coupling shaft 48b; left and right rear-side arm portions 54b that extend toward the rear surfaces of the side members 34 from the rear-side rocking center portion 54a; and rear-side end portions 54c that are journaled to the second lower coupling shafts 48b.

The lower rocking center portion 50 is composed of the front-side rocking center portion 53a and the rear-side rocking center portion 54a. The lower arm portions 51L and 51R are composed of the front-side arm portions 53b and the rear-side arm portions 54b. The end portions 52 are composed of the front-side end portions 53c and the rear-side end portions 54c.

The upper arm 29 is configured in a left-and-right split and includes: a right upper arm 56 that extends from the upper rocker shaft 22 to the side member 34 on the right side (one side); and a left upper arm 57 that extends from the upper rocker shaft 22 to the side member 34 on the left side (the other side).

The right upper arm 56 includes: a first upper rocking center portion 58 that is journaled to the upper rocker shaft 22; and an upper front arm portion 59 that extends to the right from the first upper rocking center portion 58 and is coupled to the side member 34 on the right side.

The left upper arm 57 includes a second upper rocking center portion 60 that is journaled to the upper rocker shaft 22 at the rear of the first upper rocking center portion 58, and an upper rear arm portion 61 that extends to the left from the second upper rocking center portion 60 and is coupled to the side member 34 on the left side.

That is, the right upper arm 56 and the left upper arm 57 are arranged in front and in the rear, respectively, on the upper rocker shaft 22.

The first upper rocking center portion 58 is cylindrically formed and journaled to the upper rocker shaft 22 through a bearing fitted into the inner periphery. The lower end 58a of the outer periphery of the first upper rocking center portion 58 is located at the center in the vehicle width direction.

The upper front arm portion 59 includes a cylindrical end portion 62 at the outer end in the vehicle width direction. The upper front arm portion 59 is journaled to the upper coupling shaft 47 of the side member 34 on the right side through a bearing fitted into the inner periphery of the end portion 62.

The upper rear arm portion 61 includes a cylindrical end portion 63 at the outer end in the vehicle width direction. The upper rear arm portion 61 is journaled to the upper coupling shaft 47 of the side member 34 on the left side through a bearing fitted into the inner periphery of the end portion 63.

The right upper arm 56 and the left upper arm 57 are formed inclined so as to be located downwardly toward the outer side in the vehicle width direction from the upper rocker shaft 22. The end portions 62 and 63 are located below the first upper rocking center portion 58 and the second upper rocking center portion 60, respectively. The vertical location of the end portions 62 and 63 is the same. That is, the upper arm 29 composed of a combination of the right upper arm 56 and the left upper arm 57 is formed in an inverted V-shape in front view.

Furthermore, the right upper arm 56 is formed curved so as to be located rearwardly toward the outer side in the vehicle width direction, and the left upper arm 57 is formed curved so as to be located forwardly toward the outer side in the vehicle width direction. The longitudinal location of the end portions 62 and 63 is the same.

In this embodiment, the lower arm 30 is rockably supported on the head pipe 13 by the lower rocker shaft 23, and the right upper arm 56 and the left upper arm 57 are rockably supported on the head pipe 13 by the upper rocker shaft 22, and the side members 34 are each coupled turnably with respect to the lower arm 30 and the upper arm 29 by the upper coupling shafts 47 and the lower coupling shafts 48, thereby constituting a rocker mechanism 64 in the vicinity of the head pipe 13.

That is, the rocker mechanism 64 is a multi-bar linkage in which the head pipe 13, the lower arm 30, the right upper arm 56, the left upper arm 57, and the side members 34 each serve as a link, and the lower rocker shaft 23, the upper rocker shaft 22, the upper coupling shafts 47, and the lower coupling shafts 48 serve as a turning shaft (rocker shaft).

The head pipe 13 includes, at the upper end thereof, a rod-like forwardly extending portion 65 that passes over the upper arm 29 and extends forward. A plate-like stay portion 66 extending downwardly toward the front surface of the first upper rocking center portion 58 of the right upper arm 56 is provided at the front end of the forwardly extending portion 65.

The bolt-like upper rocker shaft 22 is inserted into the stay portion 66 from the front, and the head thereof abuts on the front surface of the stay portion 66. The first upper rocking center portion 58 and the second upper rocking center portion 60 are sandwiched between the stay portion 66 and the supporting portion 21. That is, the upper rocker shaft 22 is supported at both ends by the stay portion 66 and the supporting portion 21. Thus, the support stiffness of the upper arm 29 can be increased.

The roll damper 31 is a hydraulic damper which is formed in a vertically long cylindrical shape. The roll damper 31 includes: a cylindrical cylinder portion 68 with both ends closed; a piston rod 69 that is inserted into the cylinder portion 68 from the lower end of the cylinder portion 68 and includes a piston (not shown) at the upper end in the cylinder portion 68; a spring (not shown) that is interposed in compression between the lower surface of the piston and the bottom surface of the cylinder portion 68; and an adjustment mechanism portion 70 that adjusts the magnitude of the damper effects of the roll damper 31.

Oil serving as a fluid for attenuating the movement of the piston is sealed in the cylinder portion 68. The interior of the cylinder portion 68 is axially partitioned into a first fluid chamber and a second fluid chamber by the piston.

The piston includes an oil passage that allows oil to pass in the axial direction of the piston. The action of the piston is suppressed by the resistance of oil generated in the oil passage with movement of the piston, and thus the roll damper 31 serves as a damper.

The adjustment mechanism portion 70 is, for example, a mechanism that makes the resistance of oil variable by varying the area of the oil passage connecting the first fluid chamber and the second fluid chamber.

When the cylinder portion 68 and the piston rod 69 are relatively displaced to cause the stroke of the roll damper 31 in the extension direction, a load for compressing the spring is required.

The roll damper 31 includes: a cylindrical lower supporting point portion 71 (lower supporting point) connected to a lower end of the head pipe 13; and a cylindrical upper supporting point portion 72 (upper supporting point or one end) connected to the upper arm 29.

The lower supporting point portion 71 is provided at the lower end of the piston rod 69. The upper supporting point portion 72 is provided at the upper end of the cylinder portion 68.

The head pipe 13 includes a rod-like damper stay 73 on the front surface thereof, which extends forwardly from below the lower rocker shaft 23. The front end of the damper stay 73 is located forward of the front end of the lower arm 30. A lower damper support shaft 74 (damper supporting portion) extending forward parallel to the lower rocker shaft 23 is provided at the front end of the damper stay 73. The lower damper support shaft 74 is formed in a bolt shape, the leading end thereof being fastened to the front end of the damper stay 73. The lower supporting point portion 71 of the roll damper 31 is journaled to the lower damper support shaft 74 through a bearing fitted into the inner periphery.

The right upper arm 56 includes an extending portion 75 that extends downwardly from the first upper rocking center portion 58. An upper damper support shaft 76 for supporting the upper supporting point portion 72 of the roll damper 31 is mounted to the extending portion 75.

More specifically, the upper damper support shaft 76 is formed in a bolt shape, the leading end thereof being fastened to a support stay 77 that is mounted to the lower surface of the extending portion 75. The support stay 77 is fixed to the lower surface of the extending portion 75 by a stay fixing bolt 78 that is inserted into the support stay 77 from below (bolt inserted upwardly from the bottom). The upper damper support shaft 76 rocks integrally with the right upper arm 56.

The upper damper support shaft 76 extends forward parallel to the lower damper support shaft 74, and has a front end located forward of the front end of the right upper arm 56.

The upper supporting point portion 72 of the roll damper 31 is journaled to the upper damper support shaft 76 through a bearing fitted into the inner periphery.

The roll damper 31 is disposed forward of the lower arm 30, and the upper supporting point portion 72 and the lower supporting point portion 71 are provided in vertically straddling relation to the lower arm 30.

The roll damper 31 is disposed in such a manner that its axis, in front view, overlaps the axis C of the head pipe 13 and, in side view, is substantially perpendicular to the axis 22a and the first lower rocker shaft 23a.

When the right upper arm 56 rocks, the roll damper 31 rocks left and right about the lower damper support shaft 74, and extends/contracts axially with the stroke of the cylinder portion 68 through the upper damper support shaft 76.

The connection of the upper supporting point portion 72 of the roll damper 31 to the right upper arm 56 can be performed by inserting the upper damper support shaft 76 into the upper supporting point portion 72 and fastening to the support stay 77, and then fastening the support stay 77 to the lower surface of the extending portion 75 from below with the stay fixing bolt 78. Thus, the roll damper 31 can be extended to a predetermined length for installation by the axial force when fastening the stay fixing bolt 78, and therefore it is unnecessary to perform operations while extending the roll damper 31 against the spring of the roll damper 31 with the hands of an operator, leading to excellent working efficiency.

The tie rods 45L and 45R each include: an inside end portion 80 (the upper end of the tie rod) that is coupled to the tie-rod support arm 44; an outside end portion 81 (the outer end of the tie rod) that is coupled to the tie-rod coupling arm 38; and a rod body 82 that connects the inside end portion 80 and the outside end portion 81. The rod body 82 is a linearly-extending rod.

The tie-rod support arm 44 includes: a forwardly extending portion 83 that extends forwardly from the location of the lower end of the head pipe 13 through below the damper stay 73; and an upwardly extending portion 84 that rises upwardly from the front end of the forwardly extending portion 83 and extends to the front of the lower end of the roll damper 31.

A pair of left and right inner end coupling portions 85 for coupling the inside end portions 80 of the tie rods 45L and 45R are provided at the upper end of the upwardly extending portion 84. The inner end coupling portions 85 are arranged by being divided equally into the left and right with respect to the axis C of the head pipe 13, and located outward of the lower rocking center portion 50. The inner end coupling portions 85 are shaft members protruding upwardly from the upwardly extending portion 84, and, in front view, are disposed to be inclined so as to be located outwardly in the vehicle width direction toward the upper end. Furthermore, the inner end coupling portions 85, in side view, are disposed to be inclined so as to be located rearwardly toward the upper end.

The inside end portions 80 of the tie rods 45L and 45R are turnably coupled to the inner end coupling portions 85 through ball joints or the like.

The front ends of the tie-rod coupling arms 38 provided to the bottom bridges 36 are located below and forward of the upper end of the upwardly extending portion 84 of the tie-rod support arm 44. Outer end coupling portions 86 for coupling the outside end portions 81 of the tie rods 45L and 45R are provided at the front ends of the tie-rod coupling arms 38. The outer end coupling portions 86 are shaft members protruding upwardly from the front ends of the tie-rod coupling arms 38, and, in front view and in side view, are arranged almost parallel to the inner end coupling portions 85. The outside end portions 81 of the tie rods 45L and 45R are turnably coupled to the outer end coupling portions 86 through ball joints or the like.

The outer end coupling portions 86 are located outward of the inner end coupling portions 85 in the vehicle width direction, and located forward of and below the inner end coupling portions 85. Furthermore, the outer end coupling portions 86, in front view, are located below the lower coupling shafts 48 of the lower arm 30 and outward in the vehicle width direction.

Therefore, the tie rods 45L and 45R linearly connecting the inner end coupling portions 85 and the outer end coupling portions 86 are disposed to be inclined obliquely downwardly toward the outer side in the vehicle width direction in front view. More specifically, the tie rods 45L and 45R, in front view, are located downwardly toward the outer side in the width direction, and in side view, are located downwardly toward the front.

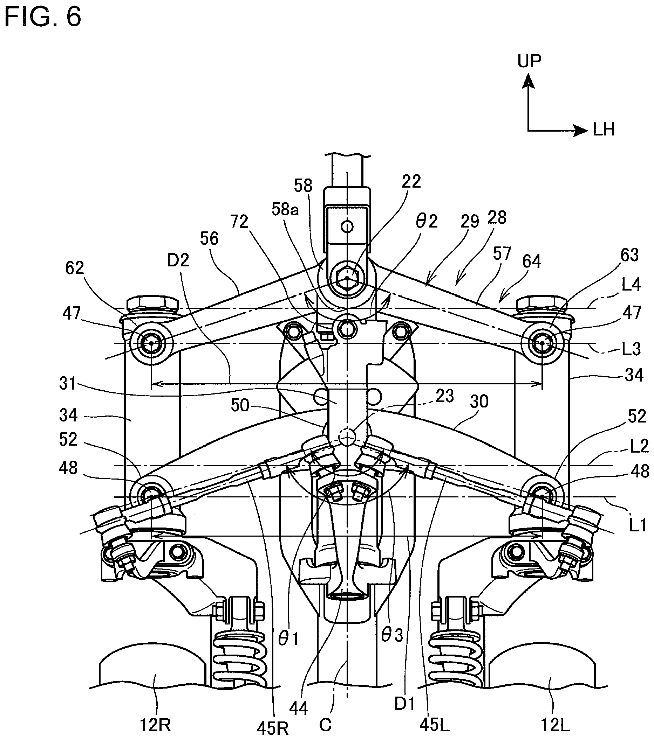

Fig. 6 is a front view illustrating geometric shapes of the rocker mechanism 64 and the tie rods 45L and 45R. More specifically, Fig. 6 is a front view of the rocking vehicle 10 in an upright position in which the rocking vehicle 10 does not rock horizontally, viewed in the direction of the axis 22a of the upper rocker shaft 22.

As described above, the lower arm 30 is formed in an inverted V-shape in front view, and the lower rocker shaft 23 is disposed above the imaginary straight line L1 connecting the left and right lower coupling shafts 48 of the side members 34. Furthermore, the lower coupling shafts 48 are located below the horizontal line L2 passing through the lower end 50a of the lower rocking center portion 50.

Furthermore, the lower arm 30 has an opening angle θ1 (V interior angle) between the left lower arm portion 51L and the right lower arm portion 51R with the lower rocker shaft 23 as a center, the opening angle θ1 being set to a predetermined angle smaller than 180° (horizontal). Here, the opening angle θ1 is an angle at which the straight lines connecting the lower rocker shaft 23 and the left and right lower coupling shafts 48 intersect each other.

The upper arm 29 is formed in an inverted V-shape in front view, and the upper rocker shaft 22 is disposed above the imaginary straight line L3 connecting the left and right upper coupling shafts 47 of the side members 34. Furthermore, the upper coupling shafts 47 are located below the horizontal line L4 passing through the lower end 58a of the first upper rocking center portion 58.

Furthermore, the upper arm 29 has an opening angle θ2 (V interior angle) between the left upper arm 57 and the right upper arm 56 with the upper rocker shaft 22 as a center, the opening angle θ2 being set to a predetermined angle smaller than 180° (horizontal). Here, the opening angle θ2 is an angle at which the straight lines connecting the upper rocker shaft 22 and the left and right upper coupling shafts 47 intersect each other.

The distance D1 between the lower coupling shafts 48 and the distance D2 between the upper coupling shafts 47 are equal, and the opening angle θ1 and the opening angle θ2 are equal. Consequently, the distance between the lower rocker shaft 23 and the imaginary straight line L1 and the distance between the upper rocker shaft 22 and the imaginary straight line L3 are also equal. That is, the positional relationship between the lower arm 30 and the upper arm 29 for the arrangement of the coupling shafts 48 and 47 on the left and right ends with respect to the central rocker shafts 23 and 22 is the same.

The lower rocker shaft 23 and the upper rocker shaft 22 are arranged at the center in the vehicle width direction. The distance between the lower rocker shaft 23 and the upper rocker shaft 22 is equal to the distance between the lower coupling shafts 48 and the upper coupling shafts 47.

The tie rods 45L and 45R, in the front view of Fig. 6, are disposed to be inclined upwardly toward the head pipe 13 from the outer end, and form an inverted V-shape in a pair.

The tie rods 45L and 45R has an opening angle θ3 (V interior angle) between the left tie rod 45L and the right tie rod 45R, the opening angle θ3 being set to a predetermined angle smaller than 180° (horizontal). Here, the opening angle θ3 is an angle at which the straight lines (axes of the tie rods 45L and 45R) connecting the turning centers of the inside end portions 80 and the turning centers of the outside end portions 81 of the tie rods 45L and 45R intersect each other.

More specifically, the opening angle θ3 of the tie rods 45L and 45R is smaller than the opening angle θ1 of the lower arm 30. In this embodiment, the upwardly extending portion 84 of the tie-rod support arm 44 is located at a height to overlap the lower end of the roll damper 31 from the front, and the inside end portions 80 of the tie rods 45L and 45R are provided on a high place. Thus, it is possible to reduce the opening angle θ3 with a simple and compact configuration.

Furthermore, as shown in Fig. 2, in each of the tie rods 45L and 45R, the inside end portion 80 located at the upper end and the outside end portion 81 located at the lower end are arranged so as to vertically sandwich the axis 48c (center line of the pivot) of the lower coupling shaft 48, and the portion thereof on the inner side in the vehicle width direction than the outside end portion 81 is disposed in such a manner as to overlap, from the front, the lower edge of the lower arm 30 in front view (Fig. 3). Thus, the tie rods 45L and 45R can be compactly arranged even if they include the opening angle θ3 and require vertical arrangement space.

In the roll damper 31, the upper supporting point portion 72 and the lower supporting point portion 71 are arranged in the vertical direction along the axis C. The upper supporting point portion 72 is disposed below the upper rocker shaft 22 and above the upper coupling shafts 47 of the upper arm 29, and the lower supporting point portion 71 (Fig. 2) is disposed below the lower rocker shaft 23 and above the lower coupling shafts 48 and the left and right end portions 52 of the lower arm 30. The rear ends of the lower coupling shafts 48 are located downward of the lower supporting point portion 71, and, as a whole, the lower supporting point portion 71 is located above the lower coupling shafts 48. Thus, it is possible to dispose the roll damper 31 along the vehicle-body center utilizing the space within the vertical width between the upper arm 29 and the lower arm 30, and therefore to compactly provide the roll damper 31 while ensuring the length of the roll damper 31.

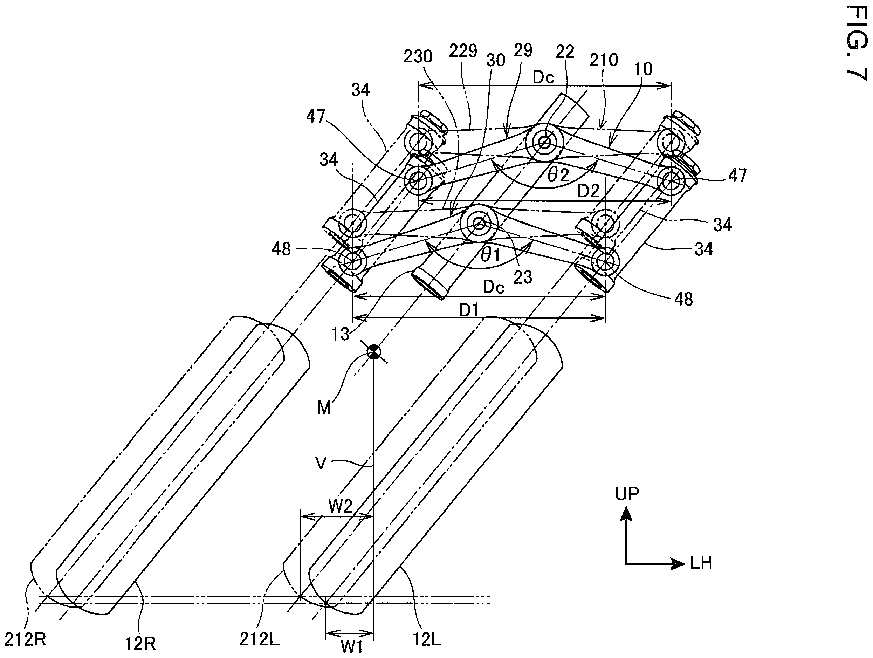

Fig. 7 is a front view showing the states of the rocker mechanism 64 and the front wheels 12L and 12R when the rocking vehicle 10 rocks to the left. Here, in Fig. 7, the state when a rocking vehicle 210 according to a comparative example rocks is also shown by chain double-dashed lines.

The rocking vehicle 10 is turned from side to side in a tilted position by the turning operation of the handlebar 42, the movement of the center of gravity of an occupant, or the like. More specifically, as shown in Fig. 7, when the rocking vehicle 10 is tilted, the side members 34 are tilted through the upper arm 29 and the lower arm 30 while the head pipe 13 is tilted with the lower rocker shaft 23 as a center, and the front wheels 12L and 12R are brought into close contact with the ground in a tilted position. That is, the front wheels 12L and 12R are rocked through the upper arm 29 and the lower arm 30 in accordance with the rocking of the body frame 11. In this state, the upper arm 29 and the lower arm 30 are displaced in the tilt direction while being kept in a substantially horizontal position with respect to the ground, and the head pipe 13 is tilted at almost the same angle as the side members 34. That is, with the rocking vehicle 10 in a tilted position, the whole front portion of the rocking vehicle 10 excluding the upper arm 29 and the lower arm 30 is integrally tilted.

The rocking vehicle 210 according to the comparative example includes the head pipe 13, the side members 34, an upper arm 229, and a lower arm 230. In each of the upper arm 229 and the lower arm 230, the coupling shafts coupled to the side members 34 are provided on the same horizontal straight line. That is, the opening angle of each of the upper arm 229 and the lower arm 230 is 180°.

Furthermore, the distance Dc between the left and right coupling shafts of the comparative example is the same as the distances D1 and D2 of the lower arm 30 and the upper arm 29 of this embodiment. Also, the mounting locations of the upper arm 229 and the lower arm 230 to the head pipe 13 are the same as those in this embodiment. That is, the rocking vehicle 10 and the rocking vehicle 210 of the comparative example are the same, except that, in the rocking vehicle 10, the opening angles θ1 and θ2 are provided, and thus the upper coupling shafts 47 and the lower coupling shafts 48 are displaced downward.

As shown in Fig. 7, if the tilt angle of the head pipe 13 is the same, the front wheels 12L and 12R of the rocking vehicle 10 are located further inward in the turning direction than front wheels 212L and 212R of the rocking vehicle 210 of the comparative example. This is caused by the opening angles θ1 and θ2 set smaller than 180°.

That is, in this embodiment, even if the location of the head pipe 13 is the same as that of the comparative example, the front wheels 12L and 12R are located further inward in the turning direction than the front wheels 212L and 212R of the comparative example, and therefore the turning performance is increased. Also, in this embodiment, since the front wheel in the turning direction (the front wheel 212L on the left side in Fig. 7) is located further outward in the vehicle width direction than that of the comparative example, it is possible to ensure a large clearance between components (such as the body frame 11) of the vehicle and the front wheel 212L during turning.

Furthermore, Fig. 7 shows the center of gravity M of the vehicle, which is located below the head pipe 13, and distances W1 and W2 from the front wheel 12L and the front wheel 212L, respectively, to a perpendicular V drawn down from the center of gravity M. Here, the distances W1 and W2 are distances between the centers of the lower surfaces of the front wheel 12L and the front wheel 212L and the perpendicular V.

In this embodiment, since the distance W1 between the center of gravity M and the front wheel 12L in the vehicle width direction is smaller than the distance W2 of the comparative example and the ground contact point of the front wheel 12L and the center of gravity M are close to each other, the moment in the tilt direction when the rocking vehicle 10 is tilted becomes smaller than that of the comparative example. Therefore, it is possible to suppress sudden tilting motion of the rocking vehicle 10 and give a feeling of safety to an occupant. Also, because the moment in the tilt direction is small, it is possible to reduce the occupant's force required to support the rocking vehicle 10 in the tilt direction when the occupant walks while pushing the rocking vehicle 10. Therefore, the push-walking of the rocking vehicle 10 is facilitated.

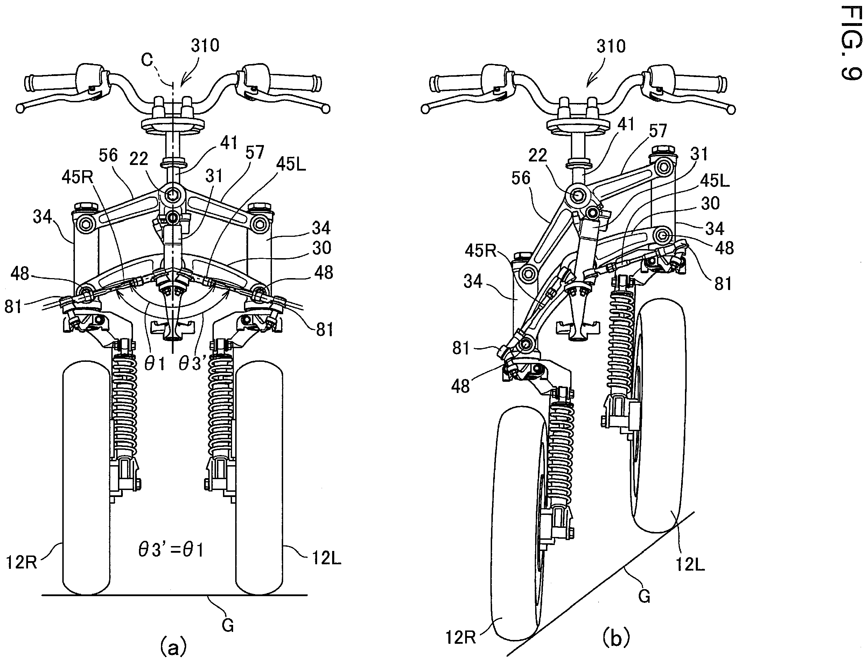

Fig. 8 shows the states of the rocking vehicle 10 before and after turning, wherein (a) is an upright position, and (b) is a tilted position. Fig. 9 shows the states of a rocking vehicle 310 before and after turning according to a comparative example, wherein (a) is an upright position, and (b) is a tilted position. It should be noted that in Figs. 8(b) and 9(b), the vehicle is traveling on a horizontal road surface G, however, the road surface G is inclined for illustration due to space limitation.

In the rocking vehicle 10, as shown in Fig. 8(a), the opening angle 03 of the tie rods 45L and 45R is smaller than the opening angle 01 of the lower arm 30.

In the rocking vehicle 310 of the comparative example, as shown in Fig. 9(a), the opening angle θ3' of the tie rods 45L and 45R is almost the same as the opening angle θ1 of the lower arm 30. More specifically, in the rocking vehicle 310, the outside end portions 81 of the tie rods 45L and 45R are displaced upward, thereby setting the opening angle θ3' greater than the opening angle θ3. The rocking vehicle 310 is of the same configuration as the rocking vehicle 10 except for a difference in the opening angle θ3'.

As shown in Fig. 8(b), when the rocking vehicle 10 is tilted to the left with respect to the road surface G, the front wheels 12L and 12R are automatically turned to the left. This motion is because, since the opening angle θ3 of the tie rods 45L and 45R is smaller than the opening angle θ1 of the lower arm 30, the tie rods 45L and 45R move so as to turn the front wheels 12L and 12R to the left (tilt direction) in tilting motion. More specifically, at the tilt angle in Fig. 8(b), while the front wheels 12L and 12R are both turned to the left, the front wheel 12L on the left side, which is the side in the tilt direction, is turned larger than the front wheel 12R on the right side.

As shown in Fig. 9(b), when the rocking vehicle 310 of the comparative example is tilted to the left with respect to the road surface G, front wheels 312L and 312R are hardly turned. This is because, since the opening angle θ3' of the tie rods 45L and 45R is almost the same as the opening angle θ1 of the lower arm 30, the tie rods 45L and 45R hardly move so as to turn the front wheels 312L and 312R in tilting motion. More specifically, at the tilt angle in Fig. 9(b), the front wheels 12L and 12R are both turned slightly outward in the vehicle width direction, and the average of the left and right turning angles is almost zero. That is, the turning of the front wheel 12L is positive and the turning of the front wheel 12R is negative, the average of both turning angles being almost zero.

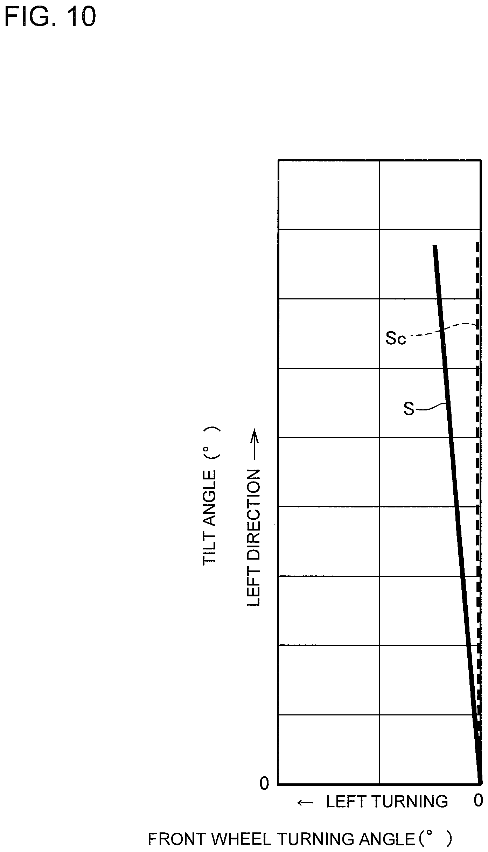

Fig. 10 is a chart showing the relationship between the tilt angle of the vehicle and the turning angle of the front wheels. Here, the tilt angle of the vehicle in Fig. 10 is the tilt angle of the head pipe 13 (the handle shaft 41), and the turning angle of the front wheels is the average value of the turning angles of the left and right front wheels.

As shown in Fig. 10, as for the turning angle S of this embodiment, the turning angle in the tilt direction increases in a substantially linear shape with increase in the tilt angle of the vehicle.

On the other hand, as for the turning angle Sc of the rocking vehicle 310 of the comparative example, even if the tilt angle of the vehicle increases, there is almost no variation in the turning angle.

In this manner, in this embodiment, the opening angle θ3 of the tie rods 45L and 45R is set smaller than the opening angle θ1 of the lower arm 30, and thus the front wheels 12L and 12R can be automatically turned in the same direction as the tilt direction when the rocking vehicle 10 is tilting. This leads to excellent turning performance of the rocking vehicle 10.

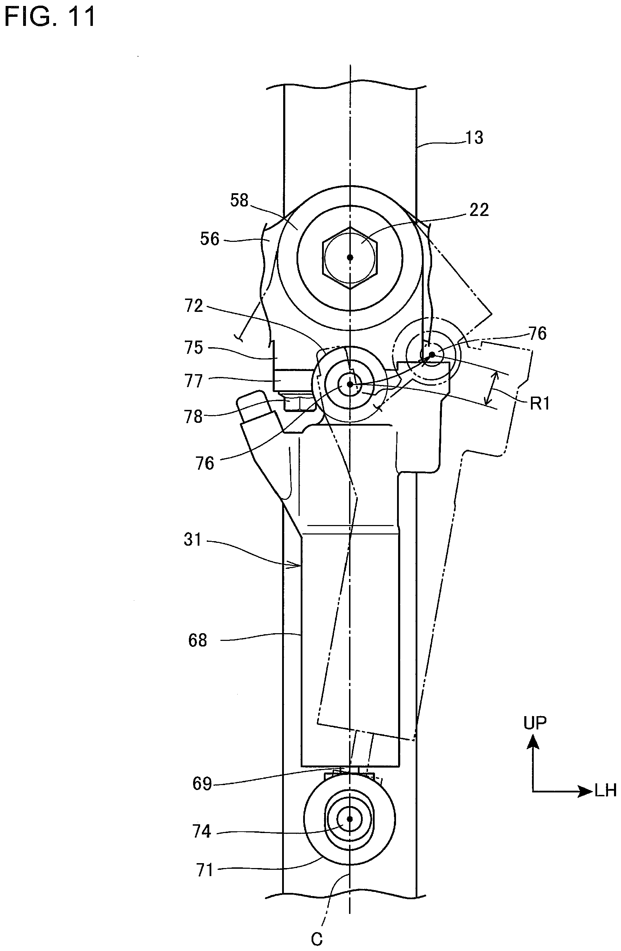

Fig. 11 shows the displacement of the roll damper 31 caused by the tilting motion of the rocking vehicle 10.

With the rocking vehicle 10 in an upright position, the roll damper 31 is aligned with the axis C of the head pipe 13 as shown in Fig. 8(a).

When the rocking vehicle 10 is tilted to the left as shown in Fig. 8(b), the right upper arm 56 rocks in a counterclockwise direction (left-handed turning) about the upper rocker shaft 22 as shown in Fig. 11, and thus the upper damper support shaft 76 located below the upper rocker shaft 22 is also displaced to the upper left integrally with the right upper arm 56. Since the upper damper support shaft 76 is displaced about the upper rocker shaft 22, the displacement locus of the upper rocker shaft 22 forms a circular arc. Thus, the roll damper 31 is pulled by the upper damper support shaft 76 and rocks to the left about the lower damper support shaft 74. Also, the roll damper 31 is pulled upward and extends axially. At this time, the stroke amount R₁ of the roll damper 31 is the difference of distances between the lower damper support shaft 74 and the upper damper support shaft 76 before and after the stroke.

In Fig. 11, the motion when the rocking vehicle 10 is tilted to the left is illustrated, and the motion when the rocking vehicle 10 is tilted to the right is symmetrical with respect to the axis C. The roll damper 31 rocks to the right about the lower damper support shaft 74, and is pulled upward to extend axially.

That is, in this embodiment, even when the rocking vehicle 10 is tilted to either side, a load in the extension direction is generated on the roll damper 31. Also, even when the rocking vehicle 10 is returned from a tilted position to either side to an upright position, a load in the contracting direction is generated on the roll damper 31.

Thus, since the roll damper 31 generates the same damping force on the left and right sides even if the rocking vehicle 10 is tilted to either side, the turning performance of the rocking vehicle 10 is excellent. Furthermore, the roll damper 31, on both sides, is operated on the extension side at the time of falling when the rocking vehicle 10 is tilted, and operated on the contraction side at the time of rising when the rocking vehicle 10 is returned to an upright position. Thus, the damper characteristics of the roll damper 31 at each of falling and rising can be set on an individual basis. This allows an improvement in the flexibility of the setting of damper characteristics and allows an improvement in the turning performance of the rocking vehicle 10.

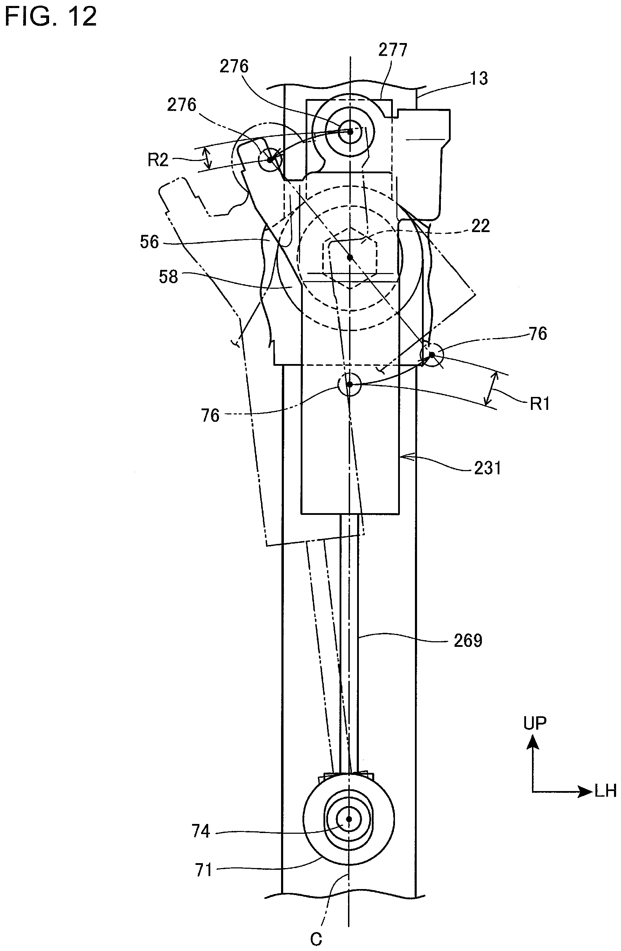

Fig. 12 shows the displacement of a roll damper 231 according to the comparative example.

The roll damper 231 is of the same configuration as the roll damper 31 except for an extended piston rod 269.

An upper damper support shaft 276 for supporting an upper supporting point 272 of the roll damper 231 is provided to a support portion 277 that extends upwardly from the first upper rocking center portion 58 of the right upper arm 56. The location of the lower damper support shaft 74 of the comparative example is the same as that of this embodiment. Here, the distance between the upper rocker shaft 22 and the upper damper support shaft 276 of the comparative example is the same as the distance between the upper rocker shaft 22 and the upper damper support shaft 76 of this embodiment. Furthermore, the tilt angles of the rocking vehicles of the comparative example and this embodiment are the same.

In the comparative example, when the rocking vehicle is tilted to the left, the upper damper support shaft 276 located above the upper rocker shaft 22 is displaced to the lower right integrally with the right upper arm 56 as shown in Fig. 12. Thus, the roll damper 31 is compressed by the upper damper support shaft 76, thereby rocking to the right about the lower damper support shaft 74, and pushed downward and contracts axially. At this time, the stroke amount R2 of the roll damper 31 is the difference of distances between the lower damper support shaft 74 and the upper damper support shaft 276 before and after the stroke. The stroke amount R2 is smaller than the stroke amount R1 of this embodiment. In the state of Fig. 11, the stroke amount R1 is about 1.5 times larger than the stroke amount R2.

Therefore, in this embodiment, it is possible to ensure a large amount of stroke of the roll damper 31 and effectively attenuate the tilting motion of the rocking vehicle 10.

It should be noted that, in a case such as the comparative example where the upper damper support shaft 276 is provided above the upper rocker shaft 22, even when the rocking vehicle is tilted to either side, a load in the compression direction is generated on the roll damper 31, and, even when the rocking vehicle is returned from a tilted position to either side to an upright position, a load in the extension direction is generated on the roll damper 31.

Referring to Figs. 1 to 6, the rocking vehicle 10 includes a rocking lock mechanism 90 that locks the rocker mechanism 64 against rocking.

The rocking lock mechanism 90 includes: a disk plate 91 fixed to the lower arm 30; and a caliper 92 fixed to the main frame 14 and capable of locking the disk plate 91 against movement.

The rocking lock mechanism 90 is a mechanism which locks the rocker mechanism 64 of the rocking vehicle 10 in an upright position, and used as a parking brake that prevents the rocker mechanism 64 from rocking when the rocking vehicle 10 is parked. The disk plate 91 and the caliper 92, in the side view of Fig. 2, are arranged within the head pipe rear space K and, in front view, are arranged at the center in the vehicle width direction.

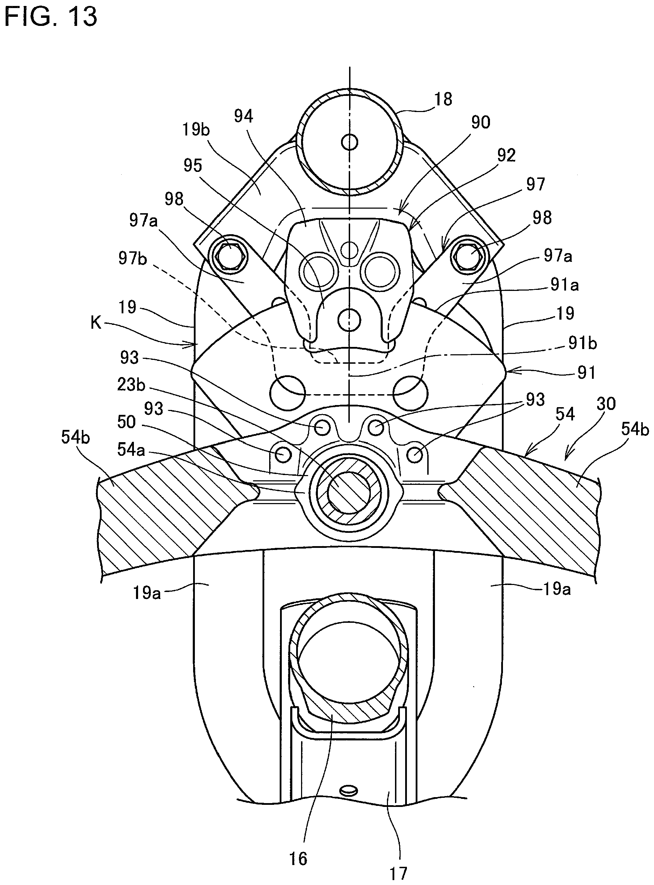

Fig. 13 is a sectional view taken along line XII-XII of Fig. 2.

The disk plate 91 is fixed to the rear-side lower arm 54 of the lower arm 30. The rear-side lower arm 54, in the side view of Fig. 2, is disposed at a front lower portion in the head pipe rear space K and provided along the rear surface of the head pipe 13. The lower rocking center portion 50 of the rear-side lower arm 54 includes a cylindrical protruding portion 50b (Fig. 5) that protrudes further rearward than the rear surfaces of the rear-side arm portions 54b.

The disk plate 91 is a plate which is formed in an approximately fan shape. More specifically, the disk plate 91 is formed in an approximately fan shape having a center angle of approximately 90°. The disk plate 91 is disposed upright so that the outer periphery 91a of the fan shape serves as the upper end, and disposed so that the center line 91b in the width direction approximately matches the axis C of the head pipe 13.

The disk plate 91 includes a notch 91c at the lower end thereof, the notch 91c being arcuately cut along the outer periphery of an upper portion of the protruding portion 50b of the rear-side lower arm 54.

As shown in Fig. 5, the disk plate 91 is disposed by causing the front surface of a lower portion thereof to abut on the rear surface of the rear-side lower arm 54, and placing the lower edge of the notch 91c from above on the outer periphery of the protruding portion 50b of the rear-side lower arm 54. Then the disk plate 91 is fastened to an upper portion of the left-right center of the rear-side lower arm 54 by a plurality of disk fixing bolts 93 that are inserted into lower portions of the disk plate 91 from the rear. The disk plate 91 extends upward along the rear surface of the rear-side lower arm 54, and the outer periphery 91a of the upper end thereof is located at an upper portion in the head pipe rear space K. The disk plate 91 faces the rear surface of the head pipe 13.

The caliper 92 is disposed at an upper portion in the head pipe rear space K in the side view of Fig. 2. The caliper 92 includes: a block-like caliper body 94 that has a groove opening downward in side view; a pair of plate-like pads 95 that are supported in the groove of the caliper body 94; and an operation lever 96 that is turned to operate the pads 95.

The caliper 92 is fixed to the bifurcated frames 19 with a plate-like caliper stay 97 interposed therebetween. The bifurcated frames 19 includes a forwardly-protruding stay portion 19b on the front surface of an upper portion thereof, and the caliper stay 97 is fixed to the stay portion 19b by bolts 98 and extends downward in the head pipe rear space K.

The caliper stay 97 includes: a pair of left and right support arm portions 97a (Fig. 13) that extend inwardly and downwardly in the vehicle width direction from the stay portion 19b; and a coupling portion 97b that connect lower ends of the left and right support arm portions 97a to each other.

The bolts 98 fix upper ends of the support arm portions 97a to the stay portion 19b. The caliper body 94 is disposed between the left and right support arm portions 97a above the coupling portion 97b and located at the center in the vehicle width direction. The caliper body 94 is fastened to vertical intermediate portions of the support arm portions 97a by caliper fixing bolts 99 (Fig. 5) that are inserted into the left and right ends of the caliper body 94. The turning shaft 96a of the operation lever 96 is located at the center in the vehicle width direction between the caliper fixing bolts 99.

An upper portion of the disk plate 91 is disposed in the groove of the caliper 92 and sandwiched between the pair of pads 95. The operation lever 96 of the caliper 92 is connected to an operating portion to be operated by an occupant, through a cable or the like. When the operation lever 96 is operated through the operating portion by an occupant, one of the pads 95 is pressed and the disk plate 91 is held between the pair of pads 95, so that the rocking of the disk plate 91 about the lower rocker shaft 23 becomes impossible. Thus, the disk plate 91 is locked against rocking, and the rear-side lower arm 54 with the disk plate 91 integrally fixed thereto is locked against rocking, thereby locking the whole rocker mechanism 64 against rocking.

As shown in Fig. 5, when the bifurcated frames 19 are seen from the rear, the caliper fixing bolts 99, the turning shaft 96a of the operation lever 96, the disk fixing bolts 93, and the second lower rocker shaft 23b are located in a rear opening 19c formed between the bifurcated frames 19. Therefore, access to the caliper fixing bolts 99, the turning shaft 96a of the operation lever 96, the disk fixing bolts 93, the second lower rocker shaft 23b, tools for use in attaching/detaching them, and the like can be provided through the rear opening 19c, leading to an excellent working efficiency, such as assembling. Furthermore, since working space can be ensured by providing the rear opening 19c, the bifurcated frames 19 can be arranged close to the head pipe 13 in the longitudinal direction. Therefore, the stiffness in the vicinity of the head pipe 13 can be effectively improved.

Further, since the disk plate 91 and the caliper 92 are arranged in the head pipe rear space K surrounded by the head pipe 13, the upper main frame 15, and the lower main frame 16, the rocking lock mechanism 90 can be compactly disposed.

In this embodiment, the lower arm 30 is provided so as to be divided into the front and rear of the head pipe 13, and the disk plate 91 is fixed to the rear-side lower arm 54 in the head pipe rear space K. Thus, it is possible to compactly dispose the rocking lock mechanism 90 utilizing the head pipe rear space K. Furthermore, the lower arm 30 is provided widely in the front-rear direction, thereby improving the stiffness of the lower arm 30.

Further, the rear-side lower arm 54 is provided at the rear of the head pipe 13, thereby allowing a reduction in the amount of protrusion of the overall lower arm 30 toward the front of the head pipe 13. It is therefore possible to compactly dispose the roll damper 31 in the space formed forward of the front-side lower arm 53. Further, the upper supporting point portion 72 of the roll damper 31 is connected to the right upper arm 56 below the upper rocker shaft 22. Thus, as described in Fig. 11, it is possible to ensure a large amount of stroke of the roll damper 31, and to provide the forwardly extending portion 65 and the stay portion 66 supporting the upper rocker shaft 22 above the upper rocker shaft 22 and improve the support stiffness of the upper rocker shaft 22.

As described above, according to the embodiment to which the present invention is applied, the rocking vehicle 10 includes: the upper arm 29 that is rockably supported by the body frame 11; the lower arm 30 that is disposed below the upper arm 29 and rockably supported by the body frame 11; the side members 34 to which the end portions 62 and 63 of the upper arm 29 and the end portions 52 of the lower arm 30 are turnably coupled; the rocker mechanism 64 that is configured from the rocker arm 28 and the side members 34, the rocker arm 28 being composed of the upper arm 29 and the lower arm 30; and the front wheels 12L and 12R that are supported below the side members 34. The upper rocker shaft 22 of the upper arm 29 is disposed above the straight line L3 connecting the left and right upper coupling shafts 47 that couple the left and right end portions 63 and 62 of the upper arm 29 to the side members 34. The lower rocker shaft 23 of the lower arm 30 is disposed above the straight line L1 connecting the left and right lower coupling shafts 48 that couple the left and right end portions 52 of the lower arm 30 to the side members 34. Thus, if the rocking vehicle 10 is rocked at the same tilt angle during turning, the ground contact points of the front wheels 12L and 12R are located further inward in the turning direction with respect to the vehicle-body center, as compared with the configuration in which the rocking center of each arm and the left and right pivots are arranged on the same straight line. It is therefore possible to improve the turning performance while ensuring the clearance between vehicle body components, such as the body frame 11, and the front wheels 12L and 12R during turning.

Furthermore, the left and right upper coupling shafts 47 of the upper arm 29 are arranged below the horizontal line L4 passing through the lower end 58a of the vehicle-body center of the upper arm 29. The left and right lower coupling shafts 48 of the lower arm 30 are arranged below the horizontal line L2 passing through the lower end 50a of the vehicle-body center of the lower arm 30. Thus, since the ground contact points of the front wheels 12L and 12R can be made largely closer to the inside in the turning direction, it is possible to improve the turning performance while ensuring the clearance between vehicle body components and the front wheels 12L and 12R.

Moreover, the roll damper 31 of the rocker mechanism 64 includes the upper supporting point portion 72 and the lower supporting point portion 71 that are arranged along the axis C that is the vehicle-body center. The upper supporting point portion 72 is disposed below the upper rocker shaft 22 of the upper arm 29 and above the left and right upper coupling shafts 47 of the upper arm 29, and the lower supporting point portion 71 is disposed below the lower rocker shaft 23 of the lower arm 30 and above the left and right lower coupling shafts 48 of the lower arm 30. Thus, since the roll damper 31 can be disposed along the axis C utilizing the vertical space formed by the shapes of the upper arm 29 and the lower arm 30, it is possible to compactly provide the roll damper 31 while ensuring the length of the roll damper 31.

Further, the rocking vehicle 10 includes the tie rods 45L and 45R that transmits steering force to the front wheels 12L and 12R. The opening angle θ1 between the left and right lower arm portions 51L and 51R of the lower arm 30 is greater than the opening angle θ3 between the left and right tie rods 45L and 45R. Thus, when the rocking vehicle 10 is rocked and tilted, the front wheels 12L and 12R turn automatically inward in the turning direction according to the relationship between the opening angle θ1 of the lower arm 30 and the opening angle θ3 of the tie rods 45L and 45R. Consequently, the turning performance can be improved.

Furthermore, the lower rocker shaft 23 supporting the lower arm 30 is provided to the head pipe 13 of the body frame 11, and the lower damper support shaft 74 supporting the roll damper 31 is provided below the lower rocker shaft 23. Thus, it is possible to provide the lower damper support shaft 74 utilizing the space below the lower rocker shaft 23 and compactly arrange the lower damper support shaft 74 and the roll damper 31, so that the space for steering the front wheels 12L and 12R can be ensured.

Furthermore, according to the embodiment to which the present invention is applied, the rocking vehicle 10 includes: the upper arm 29 that is rockably supported by the body frame 11; the lower arm 30 that is disposed below the upper arm 29 and rockably supported by the body frame 11; the side members 34 to which the end portions 62 and 63 of the upper arm 29 and the end portions 52 of the lower arm 30 are turnably coupled; the rocker mechanism 64 that is configured from the rocker arm 28 and the side members 34, the rocker arm 28 being composed of the upper arm 29 and the lower arm 30; and the tie rods 45L and 45R that transmit steering force to the front wheels 12L and 12R. The opening angle θ3 between the left and right tie rods 45L and 45R is smaller than the opening angle θ1 between the left and right lower arm portions 51L and 51R of the lower arm 30. Thus, when the rocking vehicle 10 is tilted during turning, the front wheels 12L and 12R turn automatically inward in the turning direction according to the relationship between the opening angle θ3 of the left and right tie rods 45L and 45R and the opening angle θ1 of the lower arm 30. Consequently, the turning performance of the rocking vehicle 10 can be improved.

Furthermore, the tie-rod support arm 44 extending upward toward the front is provided at the lower end of the head pipe 13 of the body frame 11. It is therefore possible to include the opening angle θ3 between the tie rods 45L and 45R, and to ensure lower space by arranging the tie rods 45L and 45R toward the upper side.

Moreover, the lower arm 30 is disposed so as to be upwardly inclined from the end portions 52 to the head pipe 13, and the tie-rods 45L and 45R and the lower arm 30 are arranged so as to overlap each other in front view. Thus, the tie rods 45L and 45R and the lower arm 30 including the opening angles θ3 and θ1, respectively, can be compactly arranged.

Further, the tie-rod support arm 44, in front view, is provided so as to overlap the roll damper 31 disposed forward of the lower arm 30. Thus, the arrangement space of the roll damper 31 disposed forward of the lower arm 30 can be ensured by the tie-rod support arm 44, and the tie rods 45L and 45R can be compactly arranged close to the head pipe 13.

Also, the inside end portions 80 serving as the upper ends and the outside end portions 81 serving as the lower ends of the tie rods 45L and 45R are arranged so as to vertically sandwich the axes 48c (Fig. 2) of the lower coupling shafts 48 that couple the end portions 52 of the lower arm 30 to the side members 34. Thus, the opening angle θ3 of the tie rods 45L and 45R can be made smaller while the tie rods 45L and 45R and the lower arm 30 are compactly arranged so as to overlap each other in front view.

Furthermore, according to the embodiment to which the present invention is applied, the rocking vehicle 10 includes: the upper arm 29 that is rockably supported by the body frame 11; the lower arm 30 that is disposed below the upper arm 29 and rockably supported by the body frame 11; the side members 34 to which the end portions 62 and 63 of the upper arm 29 and the end portions 52 of the lower arm 30 are turnably coupled; the rocker mechanism 64 that is configured from the rocker arm 28 and the side members 34, the rocker arm 28 being composed of the upper arm 29 and the lower arm 30; and the roll damper 31 that suppresses the displacement of the rocker arm 28 with respect to the body frame 11. The roll damper 31 is disposed so that a load in the same direction is generated on the roll damper 31 even if the vehicle is tilted to either side. Thus, a load in the same direction is generated on the roll damper 31 even if the vehicle is tilted while falling to either side, and the load generated on the roll damper 31 when the rocking vehicle 10 rises is in the same direction at the time of rising on either side, which is opposite from that at the time of falling. Therefore, the damper characteristics of the roll damper 31 at each of falling and rising can be set on an individual basis, thereby allowing an improvement in the flexibility of the setting of damper characteristics and allowing an improvement in the turning performance of the rocking vehicle 10.

Furthermore, since the roll damper 31 is disposed along the axis C that is the left-right vehicle width center, it is possible to generate a load in the same direction on the roll damper 31 even if the rocking vehicle 10 is tilted to either side, and to compactly dispose the roll damper 31. Also, since the roll damper 31 is disposed along the left-right vehicle width center, the left-right weight balance of the rocking vehicle 10 can be optimized.

Furthermore, the roll damper 31 is disposed so that an extension load is generated on the roll damper 31 even if the rocking vehicle 10 is tilted to either side. In this case, since the upper supporting point portion 72 of the roll damper 31 is disposed below the upper rocker shaft 22 of the upper arm 29, it is possible to provide a larger amount of stroke of the roll damper 31 with the shorter overall length of the roll damper 31 than the case where the upper supporting point of the roll damper 31 is disposed above the upper rocker shaft 22 of the upper arm 29. Therefore, the flexibility of the setting of the roll damper 31 can be improved.

Further, the upper arm 29 includes the extending portion 75 that extends downwardly from the first upper rocking center portion 58, and the upper supporting point portion 72 of the roll damper 31 is supported by the extending portion 75. Thus, it is possible to provide a larger amount of stroke of the roll damper 31 with the shorter overall length of the roll damper 31 than the case where the upper supporting point portion 72 of the roll damper 31 is disposed above the first upper rocking center portion 58.

Also, the roll damper 31 is disposed forward of the head pipe 13, and the rocking lock mechanism 90 for locking the rocker mechanism 64 against rocking is disposed rearward of the head pipe 13, thereby allowing a well-balanced arrangement of the roll damper 31 and the rocking lock mechanism 90 in the front-rear direction of the vehicle body.

Furthermore, the support stay 77 for mounting the roll damper 31 to the upper arm 29 is fastened by the stay fixing bolt 78 that is inserted upwardly from the bottom. Thus, it is possible to mount the support stay 77 to the upper arm 29 while extending the roll damper 31 with the axial force of the stay fixing bolt 78, and to easily mount the roll damper 31.

Further, according to the embodiment to which the present invention is applied, the rocking vehicle 10 includes: the body frame 11 that includes the head pipe 13 and the main frame 14 extending rearwardly from the head pipe 13; the upper arm 29 that is rockably supported by the body frame 11; the lower arm 30 that is disposed below the upper arm 29 and rockably supported by the body frame 11; the side members 34 to which the end portions 62 and 63 of the upper arm 29 and the end portions 52 of the lower arm 30 are turnably coupled; the rocker mechanism 64 that is configured from the rocker arm 28 and the side members 34, the rocker arm 28 being composed of the upper arm 29 and the lower arm 30; and the rocking lock mechanism 90 that locks the rocker mechanism 64 against rocking, the rocking lock mechanism 90 being disposed between the head pipe 13 and the main frame 14. Thus, it is possible to compactly dispose the rocking lock mechanism 90 utilizing the head pipe rear space K between the head pipe 13 and the main frame 14 located rearward of the head pipe 13.

Moreover, the rocking lock mechanism 90 includes: the disk plate 91 fixed to the rocker arm 28; and the caliper 92 fixed to the body frame 11, and the disk plate 91 is disposed between the head pipe 13 an the main frame 14. Thus, the disk plate 91 fixed to the rocker arm 28 and rocking can be compactly disposed while its rocking space is ensured.

Furthermore, the main frame 14 includes: the upper main frame 15 connected to an upper portion of the head pipe 13; and the lower main frame 16 connected to a lower portion of the head pipe 13, and the rocking lock mechanism 90 is disposed between the upper main frame 15 and the lower main frame 16. Thus, it is possible to improve the stiffness of the main frame 14 using the upper main frame 15 and the lower main frame 16, and to compactly dispose the rocking lock mechanism 90 utilizing the space between the upper main frame 15 and the lower main frame 16.

Further, the lower arm 30 includes the rear-side lower arm 54 that is disposed between the upper main frame 15 and the lower main frame 16, and the disk plate 91 is mounted to the rear-side lower arm 54. Thus, it is possible to compactly arrange the lower arm 30 and the disk plate 91 utilizing the space between the upper main frame 15 and the lower main frame 16.

Also, the roll damper 31 for suppressing the displacement of the rocker arm 28 is disposed forward of the head pipe 13. Thus, it is possible to compactly dispose the roll damper 31 in the space that is formed forward of the head pipe 13 when the rocking lock mechanism 90 is disposed rearward of the head pipe 13.

Additionally, the bifurcated frames 19, which are the portion of the main frame 14 facing the head pipe 13, are formed in a bifurcated shape. Thus, it is possible to easily install the rocker arm 28 and the rocking lock mechanism 90 utilizing the rear opening 19C between the bifurcated frames 19. It is also possible to dispose the bifurcated frames 19 close to the head pipe 13 by ensuring installation space using the rear opening 19c. Consequently, the stiffness of the body frame 11 in the vicinity of the main frame 14 can be improved.

It should be understood that the above-described embodiment is given to illustrate an aspect to which the present invention is applied, and the present invention is not limited to the foregoing embodiment.

In the above-described embodiment, the disk plate 91 and the caliper 92 are arranged in the head pipe rear space K, however, the present invention is not limited thereto, and it is only necessary that the rocking lock mechanism 90 is at least partially disposed in the head pipe rear space K.

Furthermore, in the above-described embodiment, the disk plate 91 and the caliper 92 have been used as examples of the rocking lock mechanism, however, the rocking lock mechanism may be of any form as long as it can lock the rocker mechanism 64 against rocking.

Furthermore, while it has been described that the rocking lock mechanism 90 is disposed at the center in the vehicle width direction, the present invention is not limited thereto and the rocking lock mechanism 90 may be disposed to one side in the vehicle width direction. In addition, while it has been described that the disk plate 91 is fixed to the lower arm 30, the present invention is not limited thereto and the disk plate 91 may be fixed to the upper arm 29.

Moreover, in the above-described embodiment, the engine has been used as an example of the power unit, however, the present invention is not limited thereto and the arrangement may be such that an electric motor driven by a battery is used as a power unit.

Further, in the above-described embodiment, the three-wheeled vehicle including the front wheels 12L and 12R and the single rear wheel has been used as an example of the rocking vehicle, however, the present invention is not limited thereto, but also is applicable to, for example, a four-wheeled rocking vehicle with two rear wheels.

### Reference Signs List:

10... Rocking vehicle
11... Body frame
12L, 12R.. Front wheels (wheels)
13... Head pipe
22... Upper rocker shaft (rocking center of an upper arm)
23... Lower rocker shaft (rocking center of a lower arm, or lower arm supporting portion)
28... Rocker arm
29... Upper arm
30... Lower arm
31... Roll damper
34, 34... Side members
45L, 45R... Tie rods
47, 47... Upper coupling shafts (pivots that couple the left and right end portions of the upper arm to the side members)
48, 48... Lower coupling shafts (pivots that couple the left and right end portions of the lower arm to the side members)
50a... Lower end
51L, 51R... Lower arm portions (left and right arms)
52, 52... End portions (end portions of the lower arm)
58a... Lower end
62, 63... End portions (end portions of the upper arm)
64... Rocker mechanism
71... Lower supporting point portion (lower supporting point)
72... Upper supporting point portion (upper supporting point)
74... Lower damper support shaft (damper supporting portion)
L1... Straight Line (straight line connecting the left and right pivots)
L2... Horizontal line (horizontal line passing through the lower end of the vehicle-body center of the lower arm)
L3... Straight line (straight line connecting the left and right pivots)
L4... Horizontal line (horizontal line passing through the lower end of the vehicle-body center of the upper arm)
θ1... Opening angle (opening angle between the left and right arms of the lower arm)
θ3... Opening angle (opening angle between the tie rods)

## Claims

1. A rocking vehicle comprising:
an upper arm (29) that is rockably supported by a body frame (11);
a lower arm (30) that is disposed below the upper arm (29) and rockably supported by the body frame (11);
side members (34, 34) to which left and right end portions (62, 63) of the upper arm (29) and left and right end portions (52, 52) of the lower arm (30) are turnably coupled;
a rocker mechanism (64) that is configured from a rocker arm (28) and the side members (34, 34), the rocker arm (28) being composed of the upper arm (29) and the lower arm (30); and wheels (12L, 12R) that are supported below the side members (34, 34), wherein:
a rocking center (22) of the upper arm (29) is disposed above a straight line (L3) connecting left and right pivots (47, 47) of the upper arm (29), the pivots (47, 47) of the upper arm (29) coupling the left and right end portions (63, 62) of the upper arm (29) to the side members (34, 34); and
a rocking center (23) of the lower arm (30) is disposed above a straight line (L1) connecting left and right pivots (48, 48) of the lower arm (30), the pivots (48, 48) of the lower arm (30) coupling the left and right end portions (52, 52) of the lower arm (30) to the side members (34, 34), the rocking vehicle further comprising a roll damper (31) of the rocker mechanism (64) having upper and lower supporting points (72, 71) wherein with the rocking vehicle in the upright position the upper supporting point (72) of the roll damper (31) is disposed above the left and right pivots (47, 47) of the upper arm (29), and the lower supporting point (71) of the roll damper (31) is disposed below the rocking center (23) of the lower arm (30) and above the left and right pivots (48, 48) of the lower arm (30), **characterized in that** with the rocking vehicle in the upright position the upper and lower supporting points (72, 71) of the roll damper (31) are arranged along the vehicle-body center (C) and the upper supporting point (72) of the roll damper (31) is disposed below the rocking center (22) of the upper arm (29).

2. The rocking vehicle according to Claim 1, wherein:
the left and right pivots (47, 47) of the upper arm (29) are arranged below a horizontal line (L4) passing through a lower end (58a) of the vehicle-body center of the upper arm (29); and
the left and right pivots (48, 48) of the lower arm (30) are arranged below a horizontal line (L2) passing through a lower end (50a) of the vehicle-body center of the lower arm (30).

3. The rocking vehicle according to Claim 1 or 2, further comprising tie rods (45L, 45R) that are configured to transmit a steering force to the wheels (12L, 12R), wherein the lower arm (30) has an opening angle (θ1) between left and right arms (51L, 51R), the opening angle (θ1) being greater than an opening angle (θ3) between the left and right tie rods (45L, 45R).

4. The rocking vehicle according to Claim 1 or 2, wherein a lower arm supporting portion (23) supporting the lower arm (30) is provided to a head pipe (13) of the body frame (11), and a damper support portion (74) supporting the roll damper (31) is provided below the lower arm supporting portion (23).

## Patentansprüche

1. Neigefahrzeug, das aufweist:
einen oberen Arm (29), der neigbar von einem Karosserierahmen (11) gehalten wird;
einen unteren Arm (30), der unter dem oberen Arm (29) angeordnet ist, und neigbar von dem Karosserierahmen (11) gehalten wird;
Seitenelemente (34, 34), mit denen der linke und rechte Endabschnitt (62, 63) des oberen Arms (29) und der linke und rechte Endabschnitt (52, 52) des unteren Arms (30) drehbar verbunden sind;
einen Neigemechanismus (64) der aus einem Neigearm (28) und den Seitenelementen (34, 34) ausgestaltet ist, wobei der Neigearm (28) aus dem oberen Arm (29) und dem unteren Arm (30) zusammengesetzt ist; und
Räder (12L, 12R), die unter den Seitenelementen (34, 34) gehalten werden, wobei:
ein Neigungsmittelpunkt (22) des oberen Arms (29) über einer geraden Linie (L3) angeordnet ist, die linke und rechte Drehpunkte (47, 47) des oberen Arms (29) verbindet, wobei die Drehpunkte (47, 47) des oberen Arms (29) den linken und rechten Endbereich (63, 62) des oberen Arms (29) mit den Seitenelementen (34, 34) verbinden; und
ein Neigungsmittelpunkt (23) des unteren Arms (30) über einer geraden Linie (L1) angeordnet ist, die linke und rechte Drehpunkte (48, 48) des unteren Arms (30) verbindet, wobei die Drehpunkte (48, 48) des unteren Arms (30) den linken und rechten Endbereich (52, 52) des unteren Arms (30) mit den Seitenelementen (34, 34) verbinden,
wobei das Neigefahrzeug weiterhin eine Rolldämpfung (31) des Neigemechanismus (64) mit oberen und unteren Haltepunkten (72, 71) aufweist, wobei das Neigefahrzeug in der aufrechten Position des oberen Haltepunktes (72) der Rolldämpfung (31) über dem linken und rechten Drehpunkt (47, 47) des oberen Arms (29) angeordnet ist, und der untere Haltepunkt (71) der Rolldämpfung (31) unter dem Neigungsmittelpunkt (23) des unteren Arms (30) und über dem linken und rechten Drehpunkt (48, 48) des unteren Arms (30) angeordnet ist, **dadurch gekennzeichnet, dass** beim Neigefahrzeug in der aufrechten Position der obere und untere Haltepunkt (72, 71) der Rolldämpfung (31) entlang dem Mittelpunkt (C) der Fahrzeugkarosserie angeordnet sind und der obere Haltepunkt (72) der Rolldämpfung (31) unter dem Neigungsmittelpunkt (22) des oberen Arms (29) angeordnet ist.

2. Neigefahrzeug nach Anspruch 1, wobei:
der linke und der rechte Drehpunkt (47, 47) des oberen Arms (29) unter einer horizontalen Linie (L4) angeordnet sind, die durch ein unteres Ende (58a) des Mittelpunkts der Fahrzeugkarosserie des oberen Arms (29) verläuft; und
der linke und der rechte Drehpunkt (48, 48) des unteren Arms (30) unter einer horizontalen Linie (L2) angeordnet sind, die durch ein unteres Ende (50a) des Mittelpunkts der Fahrzeugkarosserie des unteren Arms (30) verläuft.

3. Neigefahrzeug nach Anspruch 1 und 2, das weiterhin Spurstangen (45L, 45R) aufweist, die zur Übertragung einer Lenkkraft auf die Räder (12L, 12R) ausgebildet sind,
wobei der untere Arm (30) einen Öffnungswinkel (θ1) zwischen dem linken und dem rechten Arm (51L, 51R) aufweist, wobei der Öffnungswinkel (θ1) kleiner als ein Öffnungswinkel (θ3) zwischen der linken und rechten Spurstange (45L, 45R) ist.

4. Neigefahrzeug nach Anspruch 1 oder 2, wobei ein Halteabschnitt (23) des unteren Arms, der den unteren Arm (30) hält, an einem Lenkkopfrohr (13) des Karosserierahmens (11) vorgesehen ist, und ein Dämpfungshaltebereich (74), der die Rolldämpfung (31) hält, unter dem Halteabschnitt (23) des unteren Arms vorgesehen ist.

## Revendications

1. Véhicule inclinable comprenant :
un bras supérieur (29) qui est soutenu de façon inclinable par un cadre (11) ; un bras inférieur (30) qui est disposé au-dessous du bras supérieur (29) et est soutenu de façon inclinable par le cadre (11) ; des éléments latéraux (34, 34) auxquels sont couplées de manière à pouvoir tourner des portions d'extrémité gauche et droite (62, 63) du bras supérieur (29) et des portions d'extrémité gauche et droite (52, 52) du bras inférieur (30) ; un mécanisme culbuteur (64) qui est configuré depuis un culbuteur (28) et les éléments latéraux (34, 34), le culbuteur (28) étant composé du bras supérieur (29) et du bras inférieur (30) ; et des roues (12L, 12R) qui sont soutenues au-dessous des éléments latéraux (34, 34), dans lequel : un centre inclinable (22) du bras supérieur (29) est disposé au-dessus d'une ligne droite (L3) raccordant des pivots gauche et droit (47, 47) du bras supérieur (29), les pivots (47, 47) du bras supérieur (29) couplant les portions d'extrémité gauche et droite (63, 62) du bras supérieur (29) aux éléments latéraux (34, 34) ; et un centre inclinable (23) du bras inférieur (30) est disposé au-dessus d'une ligne droite (L1) raccordant les pivots gauche et droit (48, 48) du bras inférieur (30), les pivots (48, 48) du bras inférieur (30) couplant les portions d'extrémité gauche et droite (52, 52) du bras inférieur (30) aux éléments latéraux (34, 34), le véhicule inclinable comprenant en outre un amortisseur de roulis (31) du mécanisme culbuteur (64) ayant des points d'appui supérieur et inférieur (72, 71) dans lesquels, avec le véhicule inclinable dans la position verticale, le point d'appui supérieur (72) de l'amortisseur de roulis (31) est disposé au-dessus des pivots gauche et droit (47, 47) du bras supérieur (29), et le point d'appui inférieur (71) de l'amortisseur de roulis (31) est disposé au-dessous du centre inclinable (23) du bras inférieur (30) et au-dessus des pivots gauche et droit (48, 48) du bras inférieur (30), **caractérisé en ce qu'**avec le véhicule inclinable dans la position verticale, les points d'appui supérieur et inférieur (72, 71) de l'amortisseur de roulis (31) sont agencés le long du centre (C) du corps de véhicule et le point d'appui supérieur (72) de l'amortisseur de roulis (31) est disposé au-dessous du centre inclinable (22) du bras supérieur (29).

2. Véhicule inclinable selon la revendication 1, dans lequel : les pivots gauche et droit (47, 47) du bras supérieur (29) sont agencés au-dessous d'une ligne horizontale (L4) traversant une extrémité inférieure (58a) du centre du corps de véhicule du bras supérieur (29) ; et les pivots gauche et droit (48, 48) du bras inférieur (30) sont agencés au-dessous d'une ligne horizontale (L2) traversant une extrémité inférieure (50a) du centre du corps de véhicule du bras inférieur (30).

3. Véhicule inclinable selon la revendication 1 ou 2, comprenant en outre des tiges de raccordement (45L, 45R) qui sont configurées pour transmettre une force de direction aux roues (12L, 12R), dans lequel le bras inférieur (30) a un angle d'ouverture (θ1) entre les bras gauche et droit (51L, 51R), l'angle d'ouverture (θ1) étant supérieur à un angle d'ouverture (θ3) entre les tiges de raccordement gauche et droite (45L, 45R).

4. Véhicule inclinable selon la revendication 1 ou 2, dans lequel une portion de soutien du bras inférieur (23) soutenant le bras inférieur (30) est prévue sur un tube de direction (13) du cadre (11), et une portion de soutien d'amortisseur (74) soutenant l'amortisseur de roulis (31) est prévue au-dessous de la portion de soutien du bras inférieur (23).
